(19) Europäisches Patentamt

European Patent Office

Office européen des brevets

(11) **EP 0 999 655 B1**

(12) **EUROPÄISCHE PATENTSCHRIFT**

(45) Veröffentlichungstag und Bekanntmachung des Hinweises auf die Patenterteilung:
**02.08.2006 Patentblatt 2006/31**

(51) Int Cl.:
***H04B 3/23*** *(2006.01)*

(21) Anmeldenummer: **99440283.2**

(22) Anmeldetag: **22.10.1999**

(54) **Verfahren zur Bestimmung eines Echokopplungsfaktors und der Echolaufzeit in einem bidirektionalen Telekommunikationssystem**

Method for determining the echo coupling factor and the propagation delay in a bi-directional telecommunication system

Procédé pour la détermination du facteur de couplage d'écho et de retard de propagation d'écho dans un système bidirectionel de télécommunications

(84) Benannte Vertragsstaaten:
**AT BE CH CY DE DK ES FI FR GB GR IE IT LI LU MC NL PT SE**

(30) Priorität: **31.10.1998 DE 19850271**

(43) Veröffentlichungstag der Anmeldung:
**10.05.2000 Patentblatt 2000/19**

(73) Patentinhaber: **ALCATEL**
**75008 Paris (FR)**

(72) Erfinder: **Walker, Michael**
**73666 Baltmannsweiler (DE)**

(74) Vertreter: **Rausch, Gabriele et al**
**Alcatel**
**Intellectual Property Department, Stuttgart**
**70430 Stuttgart (DE)**

(56) Entgegenhaltungen:
**EP-A- 0 604 870          US-A- 5 570 423**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Ermittlung eines Echokopplungsfaktors und der Echloaufzeit in einem Übertragungssystem, bei dem eine unerwünschte Kopplung zwischen einem Empfangspfad und einem Sendepfad auftritt. Diese Kopplung ruft störende Echos hervor, deren Amplitude und deren Laufzeit ermittelt werden muß, um die Parameter des Übertragungssystems bestimmen zu können und so eine erfolgreiche Kompensationsmöglichkeit für die Echos zu erhalten. Echos treten in Telekommunikationssystemen durch elektrische Kopplung zwischen dem Sendepfad und dem Empfangspfad als Leitungsechos auf und/oder beispielsweise in Freisprecheinrichtungen oder Saalbeschallungsanlagen durch akustische Kopplung zwischen Lautsprecher und Mikrofon als akustische Echos auf. Die Stärke der Kopplung wird durch einen Kopplungsfaktor CF (Coupling Factor) bestimmt, der das Verhältnis der am Echo-Empfangsort $Y$ empfangenen zu der an der Echo-Quelle $X$ gesendeten Signalenergie angibt. Dieses Verhältnis wird, gemessen in dB, auch als Rückhördämpfung ERL (Echo Return Loss) bezeichnet. Für ein abgetastetes System wird der Kopplungsfaktor CF

$$CF = \frac{\sum_{k=0}^{N}\big(y(k)\big)^2}{\sum_{k=0}^{N}\big(x(k-i)\big)^2} \qquad (1)$$

$x(k - i)$     Abtastwert des gesendeten Signals
$y(k)$     Abtastwert des empfangenen Signals, Echosignal
$N$     Anzahl der Abtastwerte des anregenden Signals
i     Echolaufzeit, digitalisiert

Das Echosignal $y(k)$ ist um $i$ Abtastwerte im Vergleich zum gesendeten Signal $x(k - i)$, nämlich um die Laufzeit des Echos verzögert.

Ein wesentliches Problem bei der Schätzung des Kopplungsfaktors CF besteht darin, die Echolaufzeit $i$ in Gl. (1) möglichst genau zu bestimmen. Zur Ermittlung der Echolaufzeit $i$ muß festgestellt werden, wann das gesendete Signal am Echoempfangsort eintrifft. Da Telekommunikationssysteme im allgemeinen bidirektional betrieben werden, kann das Echosignal von einem Signal überlagert werden, das am fernen Ende des Übertragungsweges als Nutzsignal eingespeist wird. Dies trifft immer dann zu, wenn am nahen Ende und am fernen Ende des Übertragungsweges gleichzeitig gesprochen wird. Das ist die sogenannte Gegensprechsituation. Es muß nun bei der Berechnung des Kopplungsfaktors CF sichergestellt werden, daß sowohl die Echolaufzeit $i$ korrekt eingestellt ist und daß kein Gegensprechen (double talk) vorliegt.

Es ist bekannt, zur Erkennung eines Echos eine Korrelationsanalyse durchzuführen, bei der das bekannte gesendete Signal $x(k)$ in einem Zeitintervall $k = 0...N$ aufgezeichnet und mit dem am Echoempfangsort ankommenden Signal verglichen wird, vgl. DE-A-42 29 910. Das Korrelationsmaß φ gibt dann die Wahrscheinlichkeit an, ob ein Echo φ ≈ 1 oder ein Nutzsignal φ ≈ 0 vorliegt. Die Entscheidung, ob das Korrelationsmaß φ als Echo oder als Mischsignal, hervorgerufen durch das Gegensprechen, zu deuten ist, wird durch einen Schwellenwert γ getroffen. Je größer der Schwellenwert γ gewählt wird, desto seltener werden vorhandene Echos erkannt. Somit werden häufig Fehleinschätzungen getroffen und die Adaption des Systems wird blockiert. Wird andererseits der Schwellenwert γ zu klein gewählt, besteht die Gefahr, daß das System im Gegensprechbetrieb adaptiert und instabil wird. Nachteilig ist auch, daß Ähnlichkeiten von Sprachsignalen ebenfalls Fehlentscheidungen hervorrufen. Häufig gesprochene Vokale können sowohl vom Echoerzeuger als auch vom Gegensprechenden herrühren. Der Rechenaufwand für die Korrelationsonanlyse mit $N$ Multiplikationen, $N$ Additionen und einer Division ist sehr hoch.

Weiterhin ist ein Verfahren zur Berechnung eines Kopplungsfaktors in Freisprecheinrichtungen bekannt, bei dem zur Reduzierung des Rechenaufwandes Kurzzeitmittelwerte der gesendeten und empfangenen Signale mittels rekursiver Filter gewonnen werden, vgl. DE-A-44 30 189. Dabei wird die Tatsache ausgenutzt, daß die Gegensprechzeiten bei einer üblichen Unterhaltung begrenzt sind und die Kopplungsfaktoren beim Gegensprechen immer größer sind als bei einem Monolog. Durch die Feststellung eines kleinsten Kopplungsfaktors in einem Zeitintervall von mehreren Sekunden werden Fehlentscheidungen durch eine kurzzeitige Vergrößerung des Kopplungsfaktors beim Gegensprechen ausgeschlossen. Die Grundverzögerung des Freisprechsystems wird durch den Abstand zwischen Schallerzeuger und Schallempfänger und durch die von den A/D-, DA-Wandlern bedingte Laufzeit bestimmt und ist annähernd konstant. Der Fehler bei der Schätzung des Kopplungsfaktors wird verringert, wenn das anregende Signal mindestens in einem definierten Zeitintervall größer ist als ein Ruheschwellwert, so daß kurzzeitige Störungen von der Schätzung ausgeschlossen werden.

Solch ein Verfahren ist auch in dem US Potent US 4 587 382 offenbart. Dort ist ein Echo-Canceller beschrieben, der mittels einer Verzögerungsanalyse über die Sprach- Übertragungspfode und eines Echo Synthesizers Echos eliminiert.

In modernen Telekommunikationssystemen trifft jedoch die Voraussetzung nicht mehr zu, daß die Grundverzögerung des Echosignals annähernd konstant ist, so daß die bekannten Verfahren nicht zum gewünschten Erfolg führen. Mit der Erfindung soll nun die Aufgabe gelöst werden, ein Verfahren zur Ermittlung des Echokopplungsfaktors für Telekommunikationssysteme mit sich in einem großen Bereich ändernden Echolaufzeiten anzugeben, um eine geforderte schnelle Adaption eines Echokompensators zu erreichen.

Besonders große Echolaufzeiten treten auf bei Satellitenübertragungsstrecken und bei Funkübertragungsstrecken, beispielsweise nach dem GSM-Standard, mit mehreren Kodier- und Dekadierschaltungen. Um kostengünstige Echokompensatorschaltungen realisieren zu können, soll der Rechenaufwand zur Bestimmung des Echokopplungsfaktors und der Echolaufzeit möglichst gering sein. Diese Aufgabe wird erfindungsgemäß durch das im ersten Patentanspruch beschriebene Verfahren gelöst.

Das Wesen der Erfindung besteht darin, daß durch die Analyse eines Dialogs Zustände und Zeitabschnitte ermittelt werden, in denen die Wahrscheinlichkeit einer Fehlschätzung sehr gering ist. Eine sichere Bestimmung der Echolaufzeit und des Echokopplungsfaktors ist nur dann durchführbar, wenn der echoerzeugende Teilnehmer nach einer Sprachpause, sowohl einer eigenen als auch einer Sprachpause des Teilnehmers am fernen Ende der Übertragungstrecke, zu sprechen beginnt. Während eines Gesprächs ist es kaum möglich, eine sichere Aussage über die Eigenschaften der Übertragungsstrecke zu machen.

Die Erfindung wird nachstehend an einem Ausführungsbeispiel erläutert. In der dazugehörigen Zeichnung zeigt eine

Fig.     eine Übersichtsdarstellung einer echobehafteten Übertragungsstrecke.

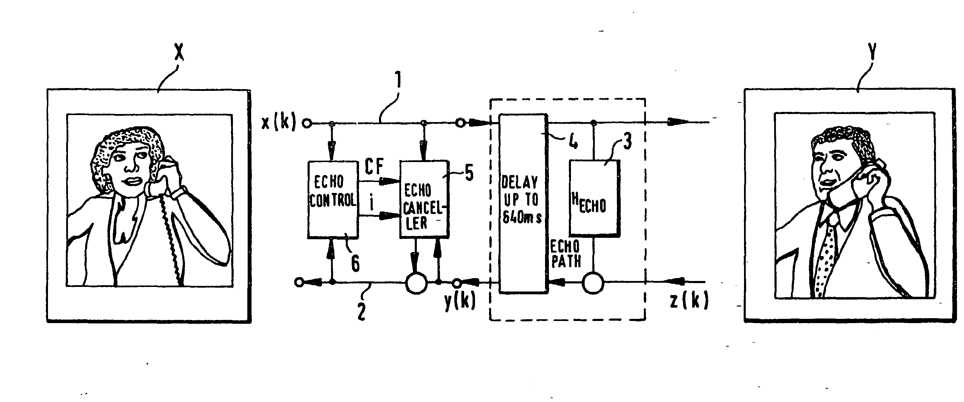

Zur Erläuterung des Sachverhalts zeigt die Figur einen lokalen Teilnehmer *X*, der über einen Sendepfad 1 und einen Empfangspfad 2 mit einem Teilnehmer *Y* am fernen Ende einer Übertragungsstrecke verbunden ist. Die Eigenschaften der Übertragungsstrecke werden durch einen Echogenerator 3 und durch ein Laufzeitglied 4 symbolisiert. Dem Teilnehmer *X* ist ein Echokompensator 5 zugeordnet, dessen Parameter von einer Steuerschaltung 6 über die Größe des Kopplungsfaktors CF und der Verzögerungszeit *i* eines Echos eingestellt werden.

Als Voraussetzung zur Identifikation eines Echos werden unterschiedliche Zustände einer natürlichen Unterhaltung zwischen dem Teilnehmer *X* und dem Teilnehmer *Y* durch entsprechende Zustandsvariable *xexc* (G1), *yexc* (G2), *P* (G3), *ybx* (G4) definiert:

$$xexc = \begin{cases} 1\,if\left(SAM\big(x(k)\big) > LAM\big(x(k)\big)\right) \\ 0\,else \end{cases} \qquad (G1)$$

$$yexc = \begin{cases} 1\,if\left(SAM\big(y(k)\big) > LAM\big(y(k)\big)\right) \\ 0\,else \end{cases} \qquad (G2)$$

$$P = \begin{cases} 1\,if\left(xexc\,\&\&\,yexc \neq 1\right) \\ 0\,else \end{cases} \qquad (G3)$$

$$ybx = \begin{cases} 1 \, if\left(P(k-1) = 1 \&\& \, yexc(k) = 1\right) \\ 0 \, if\left(P(k) = 1\right) \end{cases} \qquad (G4)$$

Dabei bedeuten

| | |
|---|---|
| *xexc* (*x*-excitation) | Anregung durch den Teilnehmer *X* |
| *yexc* (*y*-excitation) | Anregung durch den Teilnehmer *Y* |
| *P* | Pause |
| *ybx (y* before *x)* | Teilnehmer *Y* spricht vor dem Teilnehmer *X* |
| *SAM(x(k)), SAM(y(k))* | Kurzzeitmittelwert der Abtastfunktion *x(k)*, *y(k)* von dem Sendesignal, Empfangssignal des Teilnehmers X |
| *LAM(x(k)) , LAM(y(k))* | Langzeitmittelwert der Abtastfunktion *x(k)*, *y(k)* von dem Sendesignal, Empfangssignal des Teilnehmers *X* |

Ist der Kurzzeitmittelwert *SAM* größer als der Langzeitmittelwert *LAM*, so ist das ein Zeichen dafür, daß gesprochen wird, die Sprache hebt sich von einem möglichen Grundgeräusch ab. Spricht der Teilnehmer *X*, so wird die Zustandvariable *xexc* = 1 gesetzt, (G1), spricht der Teilnehmer *Y*, so wird die Zustandvariable *yexc* = 1 gesetzt, (G2). In anderen Fällen sind diese Zustandsvariablen gleich null. Die Zustandsvariable *P* für eine Sprachpause wird *P* = 1, (G3), wenn weder der Teilnehmer *X*, noch der Teilnehmer *Y* spricht; spricht einer von beiden, ist *P* = 0. Die Zustandsvariable *ybx* wird *ybx* = 1 gesetzt, (G4), wenn nach einer Sprachpause als erster der Teilnehmer *Y* spricht, das dann beim Teilnehmer *X* eintreffende Signal darf nicht als Echo bewertet werden.

Zur Ermittelung der Echolaufzeit *i* wird die Zeit gemessen, die zwischen der Anregung durch den Teilnehmer *Y* wobei die vom Teilnehmer *Y* registrierte Anregung von einem Echo, das vom Teilnehmer *X* verursacht wurde, hervorgerufen wird. Es muß also verhindert werden, daß die detektierte Anregung *yexc* durch Gegensprechen vom Teilnehmer *Y* erzeugt wird. Die Zeitmessung erfolgt deshalb nach einer Sprachpause da die Wahrscheinlichkeit, daß nach einer Sprachpause beide Teilnehmer *X, Y* gleichzeitig mit dem Sprechen beginnen wesentlich geringer ist als in anderen Gesprächssituationen.

$$i_{neu} = \begin{cases} t_{y0} - t_{x0} \, if\left(ybx \neq 1 \&\& \, P_{x0-1} = 0\right) \\ else. \, i_{alt} \end{cases} \qquad (G5)$$

$t_{x0}$ = Zeitpunkt des Sprungs von *xexc* = 0 auf *xexc* = 1
$t_{y0}$ = Zeitpunkt des Sprungs von *yexc* = 0 auf *yexc* = 1

Mit der Gleichung (G5) werden die Bedingungen für die Messung der Echolaufzeit *i* beschrieben. Falls der Teilnehmer *Y* nicht vor dem Teilnehmer *X* gesprochen hat, also *ybx* ≠ 1*,* und zuvor eine Sprachpause war, also $P_{(x0-1)}$ = 0, wird die Zeitmessung vorgenommen und eine neue Echolgufzeit ermittelt $i_{neu}$ = $t_{y0}$ - $t_{x0}$*,* wobei $t_{y0}$ den Zeitpunkt angibt, bei dem, von dem beim Teilnehmer *X* empfangenen Abtastwert *y(k)* angeregt, die Zustandsvariable *yexc* vom Wert 0 auf den Wert 1 springt. Der Zeitpunkt $t_{x0}$ wird entsprechend für den Sprung der Zustandsvariablen *xexc* vom Wert 0 auf den Wert 1 definiert. Sind die Voraussetzungen für eine Echolaufzeitmessung nicht gegeben, wird die bisher gemessene Echolaufzeit $i_{alt}$ zur Einstellung des Echokompensators beibehalten.

Die Messung der Echolaufzeit erfolgt beispielsweise mit einem Zähler, der zum Zeitpunkt $t_{x0}$ gestartet und zum Zeitpunkt $t_{y0}$ angehalten wird, so daß der Zählerstand ein Maß für die Echolaufzeit *i* ist.

Während der Messung der Echolaufzeit sind auch die Voraussetzungen zur Ermittlung des Signalpegel für die Berechnung des Kopplungsfaktors CF erfüllt. Bei der Ermittlung der Signalpegel ist die Anstiegszeitkonstante *τr* des Eingangssignals für den Kurzzeitmittelwertschätzer zu berücksichtigen. Mit der Gleichung (G6) werden die Bedingungen beschrieben, unter denen eine Messung des Kopplungsfaktors CF zugelassen wird:

$$CF_{neu} = \begin{cases} if\left(SAM\left(x(tx0)\right) > thrx\right) \& \& \; ybx \neq 1 \; / \; \left(i_{tmp} > 0\right) \\[2mm] = \dfrac{\max\left\{SAM\left(y(k)\right); SAM\left(y(k - \tau r)\right)\right\}}{\max\left\{SAM\left(x(k - i)\right); SAM\left(x(k - i - \tau r)\right)\right\}} \\[2mm] ....if\left(i_{tmp} > mxdel\right) \& \& \left(SAM\left(y(k - \tau r)\right) < thry\right) \\[2mm] = CF_{\min} \\[2mm] ....else \\[2mm] = CF_{alt} \end{cases} \qquad (G6)$$

Dabei bedeuten

| | |
|---|---|
| $CF$ | Kopplungsfaktor |
| $CF_{neu}$ | aktuell berechneter Kopplungsfaktor |
| $CF_{\min}$ | Minimalwert des Kopplungsfaktors |
| $CF_{alt}$ | Kopplungsfaktor aus einer zeitlich zurückliegenden Messung |
| $SAM(y(k))$ | Kurzzeitmittelwert der Abtastfunktion des beim Teilnehmer $X$ um die Echolaufzeit $i$ verzögert empfangenen Signals |
| $SAM(x(k-i))$ | Kurzzeitmittelwert der Abtastfunktion des beim Teilnehmer $X$ gesendeten Signals |
| $thrx$ | Schwellwert für die Abtastfunktion $x(k - i)$ |
| $thry$ | Schwellwert für die Abtastfunktion $y(k)$ |
| $i_{temp}$ | aktuelle Echolaufzeit |
| $mxdel$ | größte zu erwartende Echolaufzeit |

Für die Berechnung des Kopplungsfaktors CF sind gemäß (G6) drei Fälle zu unterscheiden:

- Eine Neuberechnung des Kopplungsfaktors CF erfolgt aus dem Quotienten wenn die Anregung von dem Teilnehmer $X$ einen bestimmten Schwellenwert $thrx$ überschritten hat, d.h. $SAM(x(tx0)) > thrx,$ der Teilnehmer $Y$ nicht vor dem Teilnehmer $X$ gesprochen hat, d.h. $ybx \neq 1$ und wenn der Zähler zur Messung der Echolaufzeit noch nicht gestartet ist, d.h. $i_{temp} > 0$ darf nicht festgestellt werden, da dann bereits ein Messvorgang läuft.
- Der Wert des Kopplungsfaktors CF wird auf einen Minimalwert $CF_{\min}$ gesetzt, wenn der Zähler zur Messung der Echolaufzeit einen Zählerstand aufweist, der einer Echolaufzeit entspricht, die größer als die maximal mögliche Echolaufzeit ist, d.h. $i_{tmp} > mxdel$ und wenn der Kurzzeitmittelwert des beim Teilnehmer $X$ empfangenen Signals kleiner als ein bestimmter Schwellenwert $thry$ ist, das bedeutet, daß kein Echo eintrifft, also eine Anregung vom Teilnehmer $Y$ fehlt, d.h. $SAM(y(k - \tau r)) < thry.$
- Der bisher ermittelte Wert des Kopplungsfaktors $CF_{alt}$ bleibt erhalten, wenn die zuvor beschriebenen Bedingungen nicht zutreffen.

Die in Gleichung (G6) eingeführten Schwellwerte $thrx, thry$ sind Hilfsgrößen zur Erhöhung des Meßgenauigkeit des Kopplungsfaktors CF und der Echolaufzeit $i$.

Falls eine direkte Kopplung zwischen dem gesendeten Abtastsignal $x(k)$ und dem empfangenen Abtastsignal $y(k)$ durch Hardwarekopplung an den Schnittstellen der A/D- und D/A-Wandler, die das analoge Teilnehmersignal in ein digitales Signal und umgekehrt wandeln, auftritt, besteht die Gefahr der Fehlmessung des Echolaufzeit $i$. Diese Kopplung ist zwar wesentlich kleiner als die zu erwartende Kopplung, die bei der 2 Draht/4 Drahtwandlung auftreten, sie stört jedoch, da die Ansprechschwelle für das empfangene Abtastsignal $y(k)$ für eine korrekte Echolaufzeitmessung, siehe Gleichung (G2), sehr gering ist, wodurch Fehler bei der Echolaufzeitmessung auftreten können. Deshalb wird ein Schwellenwert $thry$ gemäß Gleichung (G7) definiert:

$$thry = SAM\big(y(txo - tsys)\big)\big) \qquad (G7)$$

Als Schwellwert *thry* dient der Kurzzeitmittelwert des empfangenen Signals *y(k)*, das nach einer Zeit $t_{sys}$ nach Beginn der Kopplungsmessung zur Zeit $t_{x0}$ empfangen wird.

Mit dem Schwellwert *thrx* für die Abtastfunktion *x(k)* des gesendeten Signals wird im wesentlichen der Startzeitpunkt $t_{x0}$ für die Messung der Echolaufzeit *i* bestimmt.

Eine vorteilhafte Methode zur Bestimmung des Schwellwertes *thrx* ist es, den Quotienten aus einem geschätzten Sprachpegel *spl* und einer zu erwartenden Dynamik des Sprachsignals *dyn* zu bilden. Damit wird der Vorteil erzielt, daß der Startzeitpunkt der Echolaufzeitmessung von dem Kurzzeitmittelwert *SAM(x(k))* des gesendeten Sprachsignals abhängt und die Messung nicht bei geringsten Anregungen beginnt und somit der Startzeitpunkt besser an das Sprachsignal angepaßt ist.

Die Schätzung des Sprachpegels erfolgt nach der folgenden Gleichung (G8):

$$spl_{neu} = \begin{cases} spl_{alt} \ldots\ldots\ldots\ldots\ldots\ldots\ldots if\,(xexc = 1\,\&\&\,sc < \tau s) \\ SAM\_S\big(x(k)\big) \ldots\ldots\ldots\ldots\ldots if\,(xexc = 1\,\&\&\,sc > \tau s) \\ else \\ SAM\_S\big(x(k)\big) = spl_{alt} \end{cases} \qquad (G8)$$

Darin bedeuten:

| | |
|---|---|
| *spl* | = geschätzter Sprachpegel |
| *SAM_S(x(k))* | = Kurzzeitmittelwert der Abtastfunktion *x(k)* |
| $\tau s$ | = Mindestzeit der Anregung |
| sc | = durch einen Zählerstand eines Zählers (speech counter) repräsentierte Zeit |

Gleichung (G8) sagt aus, daß der Sprachpegelwert beibehalten wird, wenn zwar eine Anregung vorhanden ist, *xexc* = 1, aber der Zählerstand sc eine Zeit angebt, die kleiner ist als eine Mindestzeit der Anregung $\tau s$. Eine Neuberechung erfolgt, wenn die durch den Zählerstand sc repräsentierte Zeit größer ist als die Mindestzeit der Anregung $\tau s$, sc > $\tau s$ und eine Anregung vorliegt, *xexc* = 1

Die Schätzung des in Gleichung (G8) verwendeten aktuellen Kurzzeitmittelwertes *SAM_S(x(k))* erfolgt nach der folgenden Gleichung (G9):

$$SAM\_S\big(x(k)\big) = \begin{cases} if\,\big(xexc = 1\big) \\ if\,\big(SAM\_S\big(x(k)\big) > SAM\_S\big(x(k-1)\big)\big) \\ \big|x(k)\big| * \alpha l + SAM\_S\big(x(k-1)\big) * \beta l \\ else \\ \big|x(k)\big| * \alpha k + SAM\_S\big(x(k-1)\big) * \beta k \\ else \\ spl \end{cases} \qquad (G9)$$

Darin bedeuten:

| | |
|---|---|
| $\alpha l, \beta l$ | große Zeitkonstante |
| $\alpha k, \beta k$ | kleine Zeitkonstante |

Die Schätzung des aktuellen Kurzzeitmittelwertes $SAM\_S(x(k))$ erfolgt, wenn die Bedingung $sc > \tau s$ erfüllt ist. Gleichung (G9) beschreibt die Schätzung des aktuellen Kurzzeitmittelwertes $SAM\_S(x(k))$ in Anpassung an den Verlauf des Sprachsignals. Bei einem ansteigenden Verlauf des Sprachsignals gemäß $SAM\_S(x(k)) > SAM\_S(x(k-1))$ wird der Kurzzeitmittelwert $SAM\_S(x(k))$ gemäß Gleichung (G9) unter Verwendung einer großen Zeitkonstanten $\alpha l, \beta l$ bestimmt, ist diese Bedingung für den ansteigenden Verlauf nicht erfüllt, wird die Gleichung mit den kleinen Zeitkonstanten $\alpha k, \beta k$ verwendet.

Mit dem gemäß Gleichung (G8) ermittelten Sprachpegel $spl$ wird nunmehr der Schwellwert

$$thrx = \frac{spl}{dyn} \qquad \text{(G10)}$$

wobei $dyn$ die erwartete Sprachdynamik, beispielsweise 20 dB, angibt. Durch den Schwellwert $thrx$ wird gesichert, daß die Anregung von der Seite des Teilnehmers $X$ nicht von der Geräuschen verursacht wird, sondern die Anregung und damit der Startzeitpunkt des Meßvorganges für die Echolaufzeit $i$ wird vorteilhafterweise von der Sprachdynamik abhängig.

Mit dem erfindungsgemäßen Verfahren wird es möglich, sowohl bei akustischen Echos als auch bei Leitungsechos den Echokopplungsfaktor und die Echolaufzeit derart zu bestimmen, daß in dem so unterschiedlichen Dämpfungsbereich für akustische Echos (12 dB bis -25 dB) und für Leitungsechos (40 dB bis 6 dB) und bei so unterschiedlichen Laufzeiten für akustische Echos (0 ms bis 15 ms) und für Leitungsechos (0 ms bis 640 ms) die Parameter von Echokompensatoren sicher eingestellt werden können, so daß störende Echos kompensiert werden. Dabei konnte der Rechenaufwand bei dem Verfahren im Vergleich zu bisher bekannten Verfahren um etwa 10 % reduziert werden.

**Patentansprüche**

1.  Verfahren zur Ermittlung eines Echokopplungsfaktors ($CF$) zwischen einem Übertragungspfad (1) in Senderichtung und einem Übertragungspfad (2) in Empfangsrichtung und einer Echolaufzeit ($i$) eines gesendeten Signals $(x(k))$ und einem von dem gesendeten Signal herrührenden empfangenen Signal $(y(k))$, dem Echo, in einem Telekommunikationssystem, das aus Übertragungsstrecken mit unterschiedlichen Übertragungsfunktionen besteht und bei dem ein Informationsaustausch zwischen einem lokalen Teilnehmer ($X$) und einem Teilnehmer ($Y$) am fernen Ende der Übertragungsstrecke erfolgt und jedem Teilnehmer ($X$), ($Y$) ein Echokompensator (5) zugeordnet ist, dessen Parameter über eine Steuerschaltung (6) als Funktion des Echokopplungsfaktors $(CF)$ und der Echolaufzeit ($i$) eingestellt werden,
    **dadurch gekennzeichnet, daß**
    während des Informationsaustauschs zwischen dem lokalen Teilnehmer ($X$) und dem Teilnehmer ($Y$) am fernen Ende der Übertragungsstrecke charakteristische Zustände die x-excitation, d.h. Anregung durch den lokalen Teilnehmer ($X$), y-excitation, d.h. Anregung durch den Teilnehmer ($Y$) am formen Ende der Übertragungsstrecke, Pausen, in denen sowohl der lokale Teilnehmer ($X$) als auch der Teilnehmer ($Y$) am fernen Ende der Übertragungsstrecke Keine Informationen liefern, $y$ before $x$, d.h. Teilnehmer $(Y)$ am formen Ende der Übertragungsstrecke spricht vor dem lokalen Teilnehmer $(X)$ und Zeitabschnitte der Informationen ermittelt werden, von denen die Zulässigkeit der Messung des Echokopplungsfaktors ($CF$) und der Messung der Echolaufzeit ($i$) abhängig gemacht wird.

2.  Verfahren nach Anspruch 1, **dadurch gekennzeichnet, daß** der Startzeitpunkt der Messung des Echokopplungsfaktors ($CF$) und der Messung der Echolaufzeit ($i$) von der Zeitfunktion der übertragenen Information abhängig gemacht wird, indem bei einer Sprachübertragung ein Quotient aus dem Sprachpegel $(spl)$ und der zu erwartenden Sprachdynamik $(dyn)$ als Schwellwert $(thrx)$ des gesendeten Signals $(x(k))$ gebildet wird, der eine sichere Messung auch bei geräuschbehafteter Sprachübertragung zuläßt.

3.  Verfahren nach den Ansprüchen 1 und 2, **dadurch gekennzeichnet, daß** die Messung des Echokopplungsfaktors ($CF$) nur dann zugelassen wird, wenn der Kurzzeitmittelwert $(SAM(x(k)))$ den Schwellwert des gesendeten Signals $(x(k))$ überschritten hat und der Teilnehmer ($Y$) am fernen Ende der Übertragungsstrecke nicht vor dem lokalen Teilnehmer ($X$) eine Information geliefert hat.

4.  Verfahren nach den Ansprüchen 1 und 2 **dadurch gekennzeichnet, daß** die Messung der Echolaufzeit ($i$) nur nach einer Pause erfolgt und die Bedingung Teilnehmer ($Y$) am fernen Ende der Übertragungsstrecke liefert vor dem lokalen Teilnehmer ($X$) eine Information nicht erfüllt ist.

**5.** Verfahren nach den Ansprüchen 1 und 2 **dadurch gekennzeichnet, daß** die Messung der Echolaufzeit *(i)* und des Echokopplungsfaktors *(CF)* unterbleibt, wenn sowohl der lokale Teilnehmer (*X*) als auch der Teilnehmer (*Y*) am fernen Ende der Übertragungsstrecke eine Information liefern, sogenannte Gegensprechsituation.

**Claims**

**1.** Process for determining an echo coupling factor (*CF*) between a transmission path (1) in the transmitting direction and a transmission path (2) in the receiving direction, and an echo delay time (*i*) of a transmitted signal (*x(k)*) and a received signal (*y(k)*) originating from the transmitted signal, the echo, in a telecommunications system consisting of transmission links with different transmission functions, and in which an information exchange takes place between a local subscriber *(X)* and a subscriber (*Y*) at the remote end of a transmission link, and each subscriber *(X),(Y)* is assigned an echo suppressor (5), the parameters of which are set via a control circuit (6) as a function of the echo coupling factor (*CF*) and the echo delay time (*i*), **characterised in that** during the information exchange between the local subscriber (*X*) and the subscriber (*Y*) at the remote end of the transmission link, the characteristic states x-excitation, i.e. excitation by the local subscriber (X), y-excitation, i.e. excitation by the subscriber (Y) at the remote end of the transmission link, pause in which both the local subscriber (*X*) and the subscriber (*Y*) at the remote end of the transmission link do not supply any information, y before x, i.e. subscriber *(Y)* at the remote end of the transmission link speaks before the local subscriber *(X)*, and time segments of the information are determined, upon which the reliability of the measurement of the echo coupling factor (*CF*) and of the measurement of the echo delay time (*i*) is rendered dependent.

**2.** Process according to Claim 1, **characterised in that** the start time of the measurement of the echo coupling factor (*CF*) and of the measurement of the echo delay time (*i*) is rendered dependent upon the time function of the transmitted information **in that**, in the case of a speech transmission, a quotient of the speech level *(spl)* and the anticipated speech dynamics *(dyn)* is formed as threshold value *(thrx)* of the transmitted signal *(x(k))* which permits a reliable measurement even in the case of noisy speech transmission.

**3.** Process according to Claims 1 and 2, **characterised in that** the measurement of the echo coupling factor *(CF)* is only permitted when the short-term mean value *(SAM(x(k)))* has exceeded the threshold value of the transmitted signal *(x(k))* and the subscriber (*Y*) at the remote end of the transmission link has not supplied information before the local subscriber (*X*).

**4.** Process according to Claims 1 and 2, **characterised in that** the measurement of the echo delay time (*i*) only takes place following a pause and the condition, that the subscriber (*Y*) at the remote end of the transmission link supplies information before the local subscriber (*X*), is not fulfilled.

**5.** Process according to Claims 1 and 2, **characterised in that** the measurement of the echo delay time (*i*) and of the echo coupling factor (*CF*) does not take place if both the local subscriber (*X*) and the subscriber *(Y)* at the remote end of the transmission link supply information, a so-called double talk situation.

**Revendications**

**1.** Procédé de détermination d'un facteur de couplage d'écho (CF) entre un chemin de transmission (1) dans le sens de l'émission et un chemin de transmission (2) dans le sens de la réception et d'un temps de propagation de l'écho (i) d'un signal émis (x(k)) et d'un signal reçu (y(k)) qui se base sur le signal émis, l'écho, dans un système de télécommunication qui se compose de trajets de transmission avec différentes fonctions de transmission et avec lequel se déroule un échange d'informations entre un abonné local (X) et un abonné (Y) à l'extrémité distante du trajet de transmission et un compensateur d'écho (5) est associé à chaque abonné (X), (Y), dont les paramètres sont réglés par le biais d'un circuit de commande (6) en fonction du facteur de couplage d'écho (CF) et du temps de propagation de l'écho (i), **caractérisé en ce que** pendant l'échange d'informations entre l'abonné local (X) et l'abonné (Y) à l'extrémité distante du trajet de transmission, sont déterminés les états caractéristiques excitation x, c'est-à-dire l'excitation par l'abonné local (X), excitation y, c'est-à-dire l'excitation par l'abonné (Y) à l'extrémité distante du trajet de transmission, pauses, pendant lesquelles à la fois l'abonné local (X) et l'abonné (Y) à l'extrémité distante du trajet de transmission ne délivrent aucune information, y avant x, c'est-à-dire l'abonné (Y) à l'extrémité distante du trajet de transmission parle avant l'abonné local (X) et intervalles de temps des informations dont dépend la fiabilité de la mesure du facteur de couplage d'écho (CF) et de la mesure du temps de propagation de l'écho (i).

**2.** Procédé selon la revendication 1, **caractérisé en ce que** le moment de départ de la mesure du facteur de couplage d'écho (CF) et de la mesure du temps de propagation de l'écho (i) est rendu dépendant de la fonction de temps de l'information transmise **en ce que** dans le cas d'une transmission de la parole, un quotient du niveau de parole (sp1) et de la dynamique de parole (dyn) attendue est calculé en tant que valeur de seuil du signal émis (x(k)), lequel autorise une mesure correcte même en présence d'une transmission chargée en bruit de la parole.

**3.** Procédé selon les revendications 1 et 2, **caractérisé en ce que** la mesure du facteur de couplage d'écho (CF) n'est autorisée que lorsque la valeur moyenne à court terme (SAM(x(k))) a dépassé la valeur de seuil du signal émis (x(k)) et que l'abonné (Y) à l'extrémité distante du trajet de transmission n'a pas délivré une information avant l'abonné local (X).

**4.** Procédé selon les revendications 1 et 2, **caractérisé en ce que** la mesure du temps de propagation de l'écho (i) n'est effectuée qu'après une pause et si la condition selon laquelle l'abonné (Y) à l'extrémité distante du trajet de transmission délivre une information avant l'abonné local (X) n'est pas remplie.

**5.** Procédé selon les revendications 1 et 2, **caractérisé en ce que** la mesure du temps de propagation de l'écho (i) et du facteur de couplage d'écho (CF) n'a pas lieu si l'abonné local (X) et l'abonné (Y) à l'extrémité distante du trajet de transmission délivrent tous deux une information, une situation dite d'interphonie.